# EUROPEAN PATENT SPECIFICATION

(11) **EP 4 574 648 B1**
(45) Date of publication and mention of the grant of the patent: **25.11.2026**
(21) Application number: 23383359.9
(22) Date of filing: 22.12.2023
(51) Int. Cl.: B64C 1/06, B64C 1/18, B64D 37/32, B64D 37/02, B64D 37/30

(54) **AN AIRCRAFT FUSELAGE SECTION**
FLUGZEUGRUMPFABSCHNITT
SECTION DE FUSELAGE D'AÉRONEF

(43) Date of publication of application: 25.06.2025
(73) Proprietor: Airbus Operations, S.L.U., 28906 Getafe (Madrid) (ES)
(72) Inventor: BALLESTERO MÉNDEZ, Jorge, E-28906 Getafe, Madrid (ES); FERNÁNDEZ RAMÍREZ, Ana, E-28906 Getafe, Madrid (ES); COLMENAREJO MATELLANO, Nuria, E-28906 Getafe, Madrid (ES)
(74) Representative: ABG Intellectual Property Law, S.L.

(56) References cited:
- FR-A1- 3 096 029
- US-A- 3 480 058
- XIANFEI ZHU ET AL: "Evaluate the crashworthiness response of an aircraft fuselage section with luggage contained in the cargo hold", INTERNATIONAL JOURNAL OF CRASHWORTHINESS, vol. 22, no. 4, 4 April 2017 (2017-04-04), pages 347 - 364, XP093104576, ISSN: 1358-8265, DOI: 10.1080/13588265.2016.1258957

## Description

### TECHNICAL FIELD OF THE INVENTION

The present invention belongs to the technical field of hydrogen powered aircraft. Particularly, the present invention provides an aircraft fuselage section with improved crashworthiness.

### BACKGROUND OF THE INVENTION

In response to the environmental imperatives associated with conventional fossil fuel-based aircraft propulsion, the aviation industry is undergoing a notable shift towards exploring cleaner and more sustainable alternatives. The emission of contaminants from traditional aircraft fuels has raised concerns about its contribution to climate change and air quality degradation. In response to these challenges, there has been a growing interest in developing alternative solutions based on cleaner fuel sources.

In particular, hydrogen has emerged as a promising candidate due to its high energy density, zero carbon emissions at the point of use, and for having a potential for sustainable production methods, particularly through green hydrogen derived from renewable energy sources. Unlike traditional hydrocarbon-based fuels, the combustion of hydrogen produces only water vapor as a byproduct, making it an environmentally friendly option for reducing the carbon footprint of aviation.

However, one of the significant challenges from implementing hydrogen as a fuel for aircraft engines is the storage and distribution of hydrogen since it has low volumetric energy density, requires specialized infrastructure and particular storage conditions.

The promise of hydrogen lies not only in its clean combustion but also in its potential to revolutionize the entire aviation fuel landscape. However, reaching this potential is contingent on overcoming significant technical challenges. The development of specialized infrastructure for hydrogen storage and distribution, as well as the adaptation of aircraft engines for hydrogen combustion or fuel tank integration, requires concerted efforts and investments.

Hydrogen, as a fuel, presents a notable challenge due to its ultralight nature. The intrinsic complexities in storing hydrogen in its natural state prompt the necessity for sophisticated technical solutions to enhance density and reduce storage facility dimensions. Notwithstanding advancements in diverse hydrogen storage methods, each methodology exhibits distinctive merits and constraints. Addressing these storage challenges demands ongoing research and development efforts to augment the efficiency, scalability, and cost-effectiveness of hydrogen storage technologies.

Focusing on the potential implementation of liquid hydrogen in civil aviation, a main challenge will be the crashworthiness consideration of the overall aircraft and, more particularly, of the fuel tank. In those cases, the aircraft should be able to ensure a safe operation in case of emergency landing, wheels up landing, and fuselage crash survivability.

Currently, crashworthiness is key in aircraft design. In eventual plane accidents, it is essential to protect the elements responsible for fuel storage in the aircraft as much as possible. The fuel is usually stored in wings or horizontal stabilizers and, in few exceptions, extra tanks are located in the central fuselage for extra-long range versions. There is a need in the art for a crashworthiness concept which may provide, to the unpressurized rear fuselage section of an aircraft, the sufficient amount of energy absorption, dissipation and distribution along the fuselage in case of emergency, for example during a plane crash.

Document from XIANFEI ZHU ET AL and published in INTERNATIONAL JOURNAL OF CRASHWORTHINESS, vol. 22, no. 4, 4 April 2017, pages 347-364, discloses information regarding how to evaluate the crashworthiness response of an aircraft fuselage section with luggage contained in the cargo hold.

Document US3480058A discloses a container safety wall.

### SUMMARY OF THE INVENTION

The present invention provides an aircraft fuselage section according to claim 1 and an aircraft according to claim 15. Advantageous embodiments are defined in the dependent claims.

In a first inventive aspect, the invention provides an aircraft fuselage section extending along a longitudinal direction, wherein the aircraft fuselage section comprises:
- a fuselage structure comprising a plurality of frames,
- a floor connected to the fuselage structure, and
- crash absorption means arranged between the fuselage structure and the floor,

wherein the crash absorption means comprises a plurality of first absorption elements and a plurality of second absorption elements distributed along the longitudinal direction, the plurality of first absorption elements and the plurality of second absorption elements being configured for dissipating and distributing energy;
wherein the first absorption elements are each arranged at a position corresponding to a frame of the fuselage structure and the second absorption elements are each arranged at a position between successive frames of the fuselage structure,
wherein the aircraft fuselage section further comprises a cushioning element arranged on the floor, the cushioning element comprising foam, permanent inflatable means or temporary inflatable means.

The present invention provides an aircraft fuselage section with improved kinetic energy absorption capacities. The aircraft fuselage section according to the invention comprises a fuselage structure, a floor connected to said fuselage structure, a cushioning element arranged on the floor and crash absorption means arranged between the fuselage structure and the floor.

The combination of the previously mentioned elements ensures that any additional element, such as a fuel storage tank, located inside the fuselage section and over the cushioning element would be protected during a crash event. In case of a crash event, the cushioning element performs a braking and protective action on the additional element and transfers to the floor the pressure loads generated in the braking. At the same time, the cushioning element prevents eventual major damages of both the structure of the additional element and the floor. Also, the crash absorption means configuration helps dissipating and distributing energy inside the fuselage section during the crash event, more particularly, kinetic energy. This allows maximizing the absorption of kinetic energy during a crash event, while protecting the structural integrity of the additional element.

In particular, the dissipation and distribution of the energy is ensured by the crash absorption means which are arranged between the fuselage structure and the floor. The crash absorption means comprise a plurality of first absorption elements and a plurality of second absorption elements distributed along the longitudinal direction.

The first absorption elements are each arranged at a position corresponding to a frame of the fuselage structure and the second absorption elements are each arranged at a position between successive frames of the fuselage structure. In other words, the invention provides a repetitive pattern of crash absorption means where any first absorption element of the crash absorption means is located in between two second absorption elements and any second absorption element is located in between two first absorption elements, except for the absorption elements located at both ends of the distribution of crash absorption elements along the longitudinal direction.

The specific arrangement of the first and second absorption elements along the fuselage structure, in particular corresponding to a frame of the fuselage or in between successive frames of the fuselage structure, ensures both transverse and longitudinal dissipation and distribution of the energy.

Additionally, the present invention provides further advantages such as efficient energy absorption, dissipation and load distribution with potential weight reduction with respect to the solutions known in the state of the art for aircraft fuselage section. Also, the invention permits reducing the distance between the tank and the fuselage structure and, by doing so, it is possible to increase the tank diameter and reduce its length, and thus the aircraft fuselage length when dimensioning said aircraft. This would enable both tank and fuselage structure weight savings. Finally, the cushioning element alleviates the rest of the fuselage section, in particular the frames of the fuselage structure, to hold high acceleration peaks and the inertia loads generated during an eventual crash event.

The fuselage of an aircraft is normally divided into three main components: a tapered nose section which houses at least a portion of the cockpit from where the crew controls the operation of the aircraft, a substantially tubular section housing the passenger cabin, and a tapered tail cone. In particular, the structure of the aircraft comprises an unpressurized rear fuselage which starts at the end of the cabin and extends until the rear fuselage end, which can also be referred to as tail cone.

Once the aircraft fuselage section is implemented as part of an aircraft, the longitudinal direction of the aircraft fuselage section corresponds to the longitudinal axis of said aircraft, and a direction perpendicular to the longitudinal direction is a direction contained in the plane defined by the pitch axis and the yaw axis of the aircraft (i.e., the horizontal and vertical axes when considering a straight cruise flight).

In an embodiment, the cushioning element extends over a region of the floor.

In an embodiment, the crash absorption means are arranged between the fuselage structure and at least a portion of the region of the floor over which the cushioning element extends.

In an embodiment, the first absorption elements are arranged extending along a direction perpendicular to the longitudinal direction. In an embodiment, the first absorption elements are each arranged along a portion of the corresponding frame of the fuselage structure.

In an embodiment, the second absorption elements are arranged extending along the longitudinal direction or parallel to the longitudinal direction. In an embodiment, the second absorption elements are each arranged extending over a region between successive frames of the fuselage structure.

Further embodiments combine the previous embodiments regarding the plurality of first absorption elements and the plurality of second absorption elements.

In an embodiment, the second absorption elements are located in a central region in between each pair of first absorption elements, that is, in between two frames of the fuselage structure. By central region, it should be understood that the second absorption means are distributed essentially evenly with respect to the middle of the fuselage section defined in a cross-section view.

In an embodiment, the aircraft fuselage section further comprises at least one fuel storage tank arranged over the cushioning element.

This embodiment of the present invention helps protecting the structural integrity of the at least one fuel storage tank in case of a crash event.

Advantageously, the invention helps maximizing the sizing of the at least one fuel storage tank, in particular its cross-section and volume, by enabling an efficient solution which maximizes the absorption of kinetic energy during a crash event, while protecting the structural integrity of the fuel storage tank.

It shall be understood that the at least one fuel storage tank is configured for housing a fuel within. In an embodiment, the at least one fuel storage tank is a cryotank configured for housing liquid hydrogen (LH2) or any other suitable fuel used in the aircraft industry.

In an embodiment, the at least one fuel storage tank stores hydrogen (H₂).

In an embodiment, the fuel storage tank has a cylindrical or conical section.

In an embodiment, the at least one fuel storage tank is arranged over the floor, the cushioning element and the crash absorption means. In a particular embodiment, the floor, the cushioning element and the crash absorption means are arranged below the at least one fuel storage tank and extend, along the longitudinal direction, further than the length of the at least one fuel storage tank. In another particular embodiment, the floor, the cushioning element and the crash absorption means are arranged below the at least one fuel storage tank and the length of the floor, the cushioning element and the crash absorption means match the length of the at least one fuel storage tank. The length of the crash absorption means shall be understood as the length along which the first and second crash absorbing elements are arranged.

In an embodiment, the fuel storage tank has a cylindrical or conical section and the length of the cushioning element matches the length of said cylindrical or conical section.

In an embodiment, the fuel storage tank is arranged such that there is a gap between the fuel storage tank and the cushioning element. Advantageously, the gap between the fuel storage tank and the cushioning element helps preventing, or at least minimizing, the potential coupling between said fuel storage tank and the fuselage structure during normal operation.

In an embodiment, in case of a crash event, the fuel storage tank will enter in contact with the cushioning element first, before the fuselage structure enters in contact with the crash absorption means, the cushioning element will be able to reduce the fuel storage tank kinetic energy and distribute the pressure loads over the area of contact between the fuel storage tank and the cushioning element. As a reaction force, the cushioning element will transfer and distribute said pressure load over a specific area of the floor. Also, the plurality of first absorption elements and the plurality of second absorption elements preferably enter in contact with the fuselage structure at the same time in case of a crash event so that the efficiency of the transfer and distribution of the kinetic energy is enhanced.

In an embodiment, the aircraft fuselage section comprises a protective layer located between the fuel storage tank and the cushioning element. Advantageously, the protective layer between the fuel storage tank and the cushioning element helps preventing, or at least minimizing, the potential coupling between said fuel storage tank and the fuselage structure during normal operation. In an operative mode, when the aircraft fuselage section is implemented as part of an aircraft and a crash occurs, the protective layer will be in contact with both the fuel storage tank and the cushioning element at the same time. In particular, the fuel storage tank sinks down into the protective layer and said protective layer helps adding additional dissipation capacities of the kinetic energy.

In an embodiment, the at least one fuel storage tank is a single fuel storage tank. In another embodiment, the at least one fuel storage tank is a plurality of fuel storage tanks.

In an embodiment, the aircraft fuselage section comprises two fuel storage tanks arranged in a tandem configuration, in a side-by-side configuration or in an up-down configuration.

A tandem configuration shall be understood as the configuration wherein the fuel storage tanks are arranged consecutively one after the other along the longitudinal direction of the aircraft fuselage section.

A side-by-side configuration shall be understood as the configuration wherein the fuel storage tanks are arranged with their respective longitudinal axes being substantially parallel to each other, that is, one next to the other according to a horizontal axis perpendicular to both the longitudinal axis and the vertical axis.

An up-down configuration shall be understood as the configuration wherein the fuel storage tanks are arranged in a stacked configuration, that is, one above the other according to a vertical direction of the aircraft fuselage section.

In an embodiment, the aircraft fuselage section is an unpressurized rear section of the fuselage. In an embodiment, the aircraft fuselage section comprises a substantially tubular section and/or a tail cone.

In an embodiment, a first fuel storage tank is arranged in the substantially tubular section of the aircraft fuselage section and a second fuel storage tank is arranged in the tail cone of the aircraft fuselage section. In an embodiment, the second fuel storage tank has a central portion with a substantially tapered geometry that allows it to fit to the tapered tail cone, thus optimising the volume available for storing fuel while allowing to maintain a clearance with respect to the fuselage structure.

In an embodiment, the cushioning element, the floor and the crash absorption means extend in the longitudinal direction along the whole length of the first and second fuel storage tanks, thus providing crash protection to both fuel storage tanks. In an embodiment, the cushioning element, the floor and the crash absorption means do not extend in the longitudinal direction along the length of the first or the second fuel storage tank, thus providing crash protection to one fuel storage tank only.

In an embodiment, the cushioning element, the floor and the crash absorption means extend in the longitudinal direction along the length of the first fuel storage tank and the aircraft fuselage section comprises a second cushioning element, a second floor and second crash absorption means extending in the longitudinal direction along the length of the second fuel storage tank. Thus, both fuel storage tanks are protected from crash.

In an embodiment, the floor and the crash absorption means extend in the longitudinal direction along the whole length of the first and second fuel storage tanks, the cushioning element extends in the longitudinal direction along the length of the first fuel storage tank and the aircraft fuselage section comprises a second cushioning element extending in the longitudinal direction along the length of the second fuel storage tank. Thus, each fuel storage tank has a corresponding cushioning element.

In an embodiment, the floor is flat.

In an embodiment, the floor is curved. In a particular embodiment, the floor has a curvature substantially matching the curvature of the aircraft fuselage section. In a particular embodiment, the floor has a curvature substantially matching the curvature of the fuel storage tank.

In an embodiment, the protective layer is made of an elastomeric material. Advantageously, the elastomeric material helps absorbing small relative displacements between the fuel storage tank and the cushioning element.

The term "elastomeric" refers to a polymer material having rubber-like properties such as a material having the capacity to regain its original form when a load is removed from said material.

In an embodiment, the aircraft fuselage section comprises attaching means configured to attach the at least one fuel storage tank to the fuselage structure.

The attachment of the at least one fuel storage tank to the fuselage structure may be performed using discrete attachment joints, such as lugs, fittings and/or rods, using continuous attachment joints, such as band-clamps and/or straps, or using any combination thereof.

In an embodiment, the attaching means comprises lugs, fittings, rods, band-clamps, straps or any combination thereof.

In an embodiment, the fuel storage tank is arranged resting on at least a portion of the attaching means.

In an embodiment, additionally to the attaching means configured to attach the at least one fuel storage tank to the fuselage structure, the aircraft fuselage section comprises at least one safety belt configured to retain the at least one fuel storage tank in case of a crash event. The at least one safety belt would actuate only in case of a crash event, helping the attaching means to overcome the high acceleration peaks and the associated inertia loads. In an embodiment, the safety belt is implemented as a band-clamp or strap attached to the fuselage structure. In an embodiment, the aircraft fuselage section comprises a plurality of safety belts.

A strap shall be understood as a strip or band of material used for securing, holding together or clamping an object in position. Preferred materials, alone or in combination, for manufacturing the described straps are textile materials with fibers of materials such as nylon, polyamide, Ultra-high-molecular-weight polyethylene ("UHMWPE"), or metallic materials.

In an embodiment, the straps are arranged such as to form substantially a U-shape.

In an embodiment, the straps are arranged such as to form substantially an L-shape.

In an embodiment, the straps are arranged such as to form a closed loop, with both attaching means being attached to the same part of the fuselage structure.

In an embodiment the fuel storage tank is made of composite or metal.

In an embodiment, the first absorption elements and/or the second absorption elements are:
- metallic, preferably aluminium alloys or titanium alloys;
- made of composite material, preferably epoxy resin, foam or any combination thereof; or
- any combination thereof.

A metallic absorption element provides a damage propagation/distribution which helps dissipating energy more efficiently by plastic deformation which takes place during crushing of the element, or elements, during a crash event.

A composite absorption element provides a damage propagation/distribution which helps dissipating energy more efficiently by means of collapsing, tearing or bearing which takes place during crushing of the element, or elements, during a crash event. In the particular case of composite absorption elements, some specific composite such as foam or honeycomb shaped core are able to provide collapsing, tearing or bearing capacities combined with plastic deformation capacities.

In an embodiment, the first and/or second absorption elements are made of carbon, glass, aramid and/or Ultra-High-Molecular-Weight Polyethylene (UHMWPE) fibres combined with high-performance epoxy resins and/or special foams.

In an embodiment, the first absorption elements and/or the second absorption elements:
- are configured to undergo plastic deformation during a crash event; and/or
- are configured to collapse and/or tear out during a crash event.

In the embodiment where the first absorption elements and/or the second absorption elements are configured to undergo plastic deformation, said absorption elements are preferably made of metal and are able to dissipate energy in such a way that it ensures a propagation/distribution of damage due to a crash event. In a particular embodiment, the first absorption elements and/or the second absorption elements are one or more cylindrically shaped portions.

In an embodiment, the floor comprises a panel and supporting elements, wherein the supporting elements comprise a plurality of longitudinal beams extending in the longitudinal direction and a plurality of transversal beams extending perpendicularly to the longitudinal beams; wherein the longitudinal beams are connected to the transversal beams and one or more transversal beams are connected to the fuselage structure.

Advantageously, the structure of the floor according to this embodiment provides increased rigidity and resistance of the floor in order to withstand loads generated by a crash event. In particular, the stability is enhanced thanks to the overall distribution of the supporting elements along both the longitudinal direction and the perpendicular direction.

In an embodiment, the longitudinal beams and the transversal beams are equally and homogeneously distributed along the floor in order to provide even resistance capacities to the surface defined by the floor. In an embodiment, the longitudinal beams and the transversal beams are unequally distributed along the floor.

In an embodiment, the floor is substantially flat and both the longitudinal beams and transversal beams are substantially straight. In an embodiment, the floor is curved, the longitudinal beams are substantially straight and the transversal beams are curved and extend in the plane perpendicular to the longitudinal direction. In particular, the curved floor has a higher resistance with respect to a flat floor which provides better support to compression loads arisen during a crash event.

In an embodiment, the floor is made of composite material and/or metal.

In an embodiment, the cushioning element comprises a plurality of cushioning portions configured to be assembled with each other. In this particular embodiment, the plurality of cushioning portions facilitate the installation and transport of the cushioning element. In an embodiment the cushioning portions have similar cross-sections, thus providing a substantially continuous surface when assembled with each other.

In an embodiment, the cushioning element comprises a single cushioning portion. In an embodiment, the cushioning portion is substantially of the size of the fuel storage tank.

In an embodiment, the cushioning element is concave-shaped.

In an embodiment, a first portion of the cushioning element has a shape that substantially matches with the concave shape of the fuselage structure. **In** particular, the curvature of both the first portion of the cushioning element and the fuselage structure match.

In an embodiment, a second portion of the cushioning element has a shape that substantially matches with the shape of the fuel storage tank. In particular, the curvature of both the second portion of the cushioning element and the fuel storage tank match.

In an embodiment where the cushioning element comprises foam, said foam is preferably a foam with a specific density in order to adapt the stiffness mechanical properties of the cushioning element to a desired behaviour. In that sense, the cushioning element of this embodiment helps minimizing the stress level generated over the fuel storage tank surface area.

In some particular embodiments, the cushioning element is fully made of foam.

In other particular embodiments, only the outer surface of the cushioning element is made of foam.

In an embodiment, the cushioning element has a specific thickness which allow said cushioning element to enter in direct contact with the surface area of the fuel storage tank in case of a crash event. The specific thickness of the cushioning element is the thickness, or distance, which is comprised in the available space between the floor and the fuel storage tank.

In an embodiment, where the cushioning element comprises permanent inflatable means, said permanent inflatable means are made of pneumatic material such as inflatable panels. The permanent inflatable means are filled to a particular pressure in order to ensure the function of loads transfer from the cushioning element to the floor while minimizing the stress level generated over the surface area of the fuel storage tank.

In an embodiment, both foam and permanent inflatable means can be combined as a particular embodiment. In a particular embodiment, the foam has a low stiffness value in order to protect the surface area of the fuel storage tank and the permanent inflatable means have a low to medium stiffness value.

In an embodiment where the cushioning element comprises temporary inflatable means such as airbags, said temporary inflatable only inflates in case of a crash event through a pyrotechnic system or similar.

In an embodiment, the cushioning element includes an airbag with a regulation valve in order to control overpressure and absorb kinetic energy, for example, by gas expansion.

In an embodiment, the aircraft fuselage section comprises a substantially cylindrical upper shell configured to maximize fuel tank storage capacity and a substantially vertical elliptical lower shell to enhance the crashworthiness capabilities of the fuselage structure to transfer the compression loads arisen during the crash event.

In an embodiment, the crash absorption means are connected to the fuselage structure at a lower side of the floor, at the fuselage inner side, at the inner side of the plurality of frames, or any combination thereof.

In a second inventive aspect, the present invention provides an aircraft comprising an aircraft fuselage section according to any embodiment of the first inventive aspect of the invention.

In an embodiment, the lower part of the fuselage of the aircraft has an elliptical shape in order to improve load transfer to the fuselage frames and the more circular upper part of said fuselage. The elliptical shape improves the crashworthiness performance of the fuselage structure.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figures 1: This figure shows a schematic representation of a longitudinal section view of an aircraft fuselage section according to an embodiment of the invention.
- Figure 2: This figure shows a more detailed schematic representation of a longitudinal section view of an aircraft fuselage section according to the embodiment of the invention of figure 1.
- Figure 3-5: These figures show a schematic representation of a cross-sectional view of an aircraft fuselage section according to an embodiment of the invention.
- Figure 6: This figure shows a schematic representation of a cushioning element according to an embodiment of the invention.
- Figure 7: This figure shows a schematic representation of a floor according to an embodiment of the invention.
- Figure 8: This figure shows a schematic representation of the attaching means according to an embodiment of the invention.
- Figure 9: This figure shows a schematic representation of an aircraft comprising an aircraft fuselage section according to an embodiment of the invention.

### DETAILED DESCRIPTION OF THE INVENTION

Once the object of the invention has been outlined, specific non-limitative embodiments are described hereinafter.

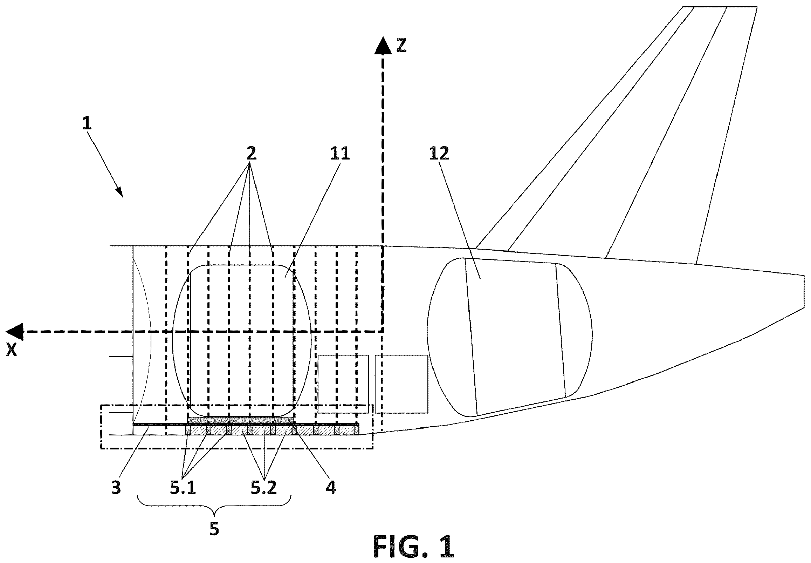

Figure 1 shows a schematic representation of a longitudinal section view of an aircraft fuselage section (1) according to an embodiment of the invention. In particular, the aircraft fuselage section (1) shows a fuselage structure comprising a plurality of frames (2), a floor (3) which is connected to the fuselage structure, a cushioning element (4) arranged on the floor (3) and located below a first fuel storage tank (11). The aircraft fuselage section (1) of figure 1 also depicts crash absorption means (5) arranged between the fuselage structure and the floor (3).

The crash absorption means (5) comprises a plurality of first absorption elements (5.1) and a plurality of second absorption elements (5.2) distributed along the longitudinal direction (X), the plurality of first absorption elements (5.1) and the plurality of second absorption elements (5.2) being configured for dissipating and distributing energy in order to limit the transfer of energy to the first fuel storage tank (11) in case of a crash plane.

As shown in figure 1, the first absorption elements (5.1) are each arranged at a position corresponding to a frame (2) and the second absorption elements (5.2) are each arranged at a position between successive frames (2) of the fuselage structure. The second absorption elements (5.2) extend substantially along the longitudinal direction (X) and in the transversal plane.

In this particular embodiment depicted in figure 1, the aircraft fuselage section (1) also comprises a second fuel storage tank which is free of cushioning element or crash absorption means because, in this configuration of the tanks, the second fuel storage tank is less prone to crash. In other embodiments, not shown in the set of figures, the area where the second fuel storage tank (11) is arranged or even the whole aircraft fuselage section (1) is fully protected by cushioning element and/or crash absorption means. In other embodiments, the aircraft fuselage section (1) does not include more than one fuel storage tank.

In an embodiment, the first absorption elements (5.1) and/or the second absorption elements (5.2) are:
- metallic, preferably aluminium alloys or titanium alloys;
- made of composite material, preferably epoxy resin, foam or any combination thereof; or
- any combination thereof.

In an embodiment, the first absorption elements (5.1) and/or the second absorption elements (5.2) are configured to undergo plastic deformation during a crash event and/or are configured to collapse and/or tear out during a crash event.

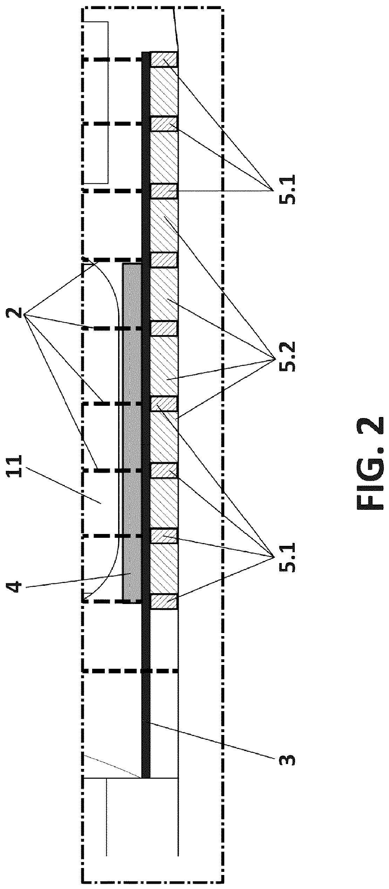

Figure 2 shows a more detailed view of a portion of the elements located below the first fuel storage tank (11) of the aircraft fuselage section (1). In particular, figure 2 depicts the layout of the floor (3), the cushioning element (4) and the crash absorption means (5). As shown in this figure, the crash absorption means (5) are arranged in such a way that the first absorption elements (5.1) are disposed at a position matching with the frames (2) of the fuselage structure and the second absorption elements (5.2) are arranged in between frames (2), that is in between first absorption elements (5.1). In other words, there is a sequential distribution of first absorption elements (5.1) and second absorption elements (5.2) along the longitudinal direction (X).

In an embodiment, the set-up of the elements of the invention is responsible for the fuel storage tank (11) getting in contact with the cushioning element (4) before the fuselage structure does with the crash absorption elements (5). In another embodiment, these elements enter in contact at the same time in case of a crash event or in an opposite way with respect to the previous embodiment, that is the fuselage structure enters first in contact with the crash absorption elements (5) and then the fuel storage tank (11) gets in contact with the cushioning element (4). In an embodiment, the mentioned elements are arranged with the appropriate gaps there between to define the desired sequence of contacts.

In the embodiment shown in figure 2, the crash absorption means (5) extend further the length of the cushioning element (4) and further the length of the fuel storage tank (11).

Also in the embodiment shown in figure 2, the cushioning element (4) length matches with the length of the first fuel storage tank (11). In other embodiments, the cushioning element (4) extends further the length of the first fuel storage tank (11) in order to provide additional protection to other elements located in the surrounding area of said first fuel storage tank (11).

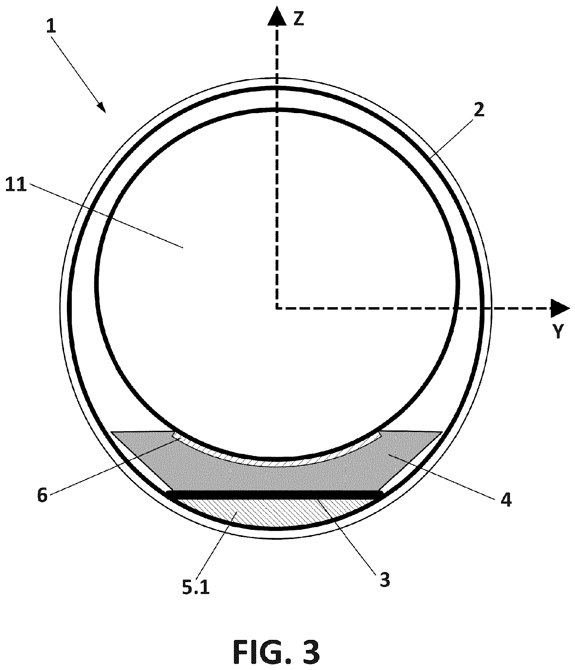

Figures 3-5 show a schematic representation of a cross-sectional view of an aircraft fuselage section (1) according to an embodiment of the invention.

Figure 3 depicts a cross-sectional view of the aircraft fuselage section (1), wherein the cross-sectional view shows the aircraft fuselage section (1) at a plane traversing a first absorption element (5.1), that is, the cross-section is performed along one frame (2) of the fuselage structure. In this embodiment, a first fuel storage tank (11) is arranged over the cushioning element (4). In this embodiment, the cushioning element (4) and the first fuel storage tank (11) are separated by a protective layer (6). As shown, the cushioning element (4) is arranged on the floor (3) and a first absorption element (5.1) is arranged between the fuselage structure and the floor (3), that is, the first absorption element (5.1) is arranged between the frame (2) of the fuselage structure and the floor.

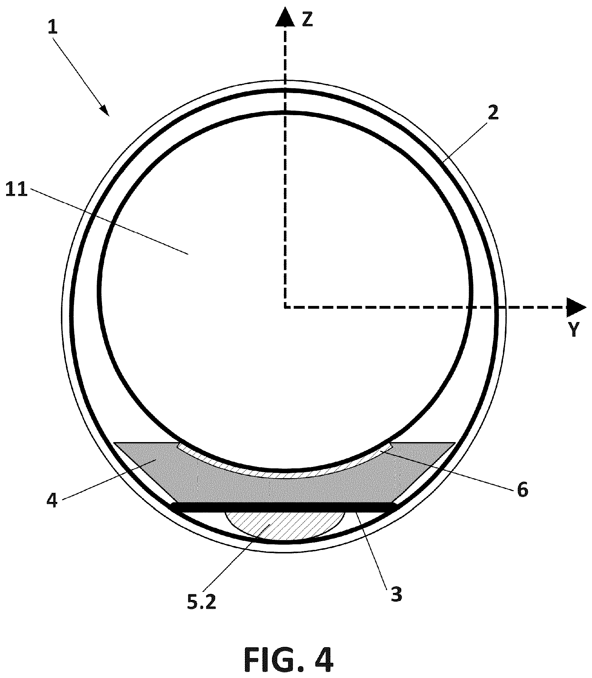

Figure 4 depicts a cross-sectional view of the aircraft fuselage section (1) , wherein the cross-sectional view shows the aircraft fuselage section (1) at a plane traversing a second absorption element (5.2), that is, the cross-section is performed at a location between two successive frames (2) of the fuselage structure. In this figure, the aircraft fuselage section (1) includes a protective layer (6) located between the fuel storage tank (11) and the cushioning element (4). The cushioning element (4) is arranged on the floor (3) and the second absorption element (5.2) is arranged between the fuselage structure and the floor (3).

In other embodiments, not shown in figures 3 to 5, the fuel storage tank (11) is arranged such that there is a gap between the fuel storage tank (11) and the cushioning element (4). In these embodiments, where a gap is located between the fuel storage tank (11), the aircraft fuselage section may optionally include a protective layer (6).

In an embodiment, the protective layer (6) is made of an elastomeric material.

In some embodiments, the plurality of frames of the fuselage structure has a rounded shape as shown in figure 3 and 4.

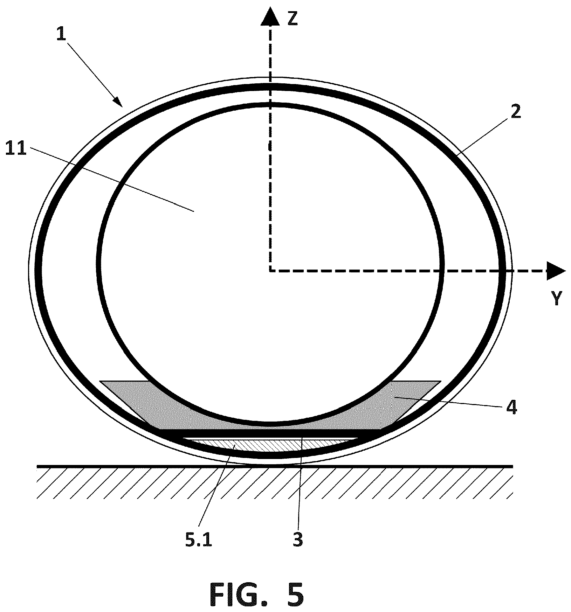

Figure 5 shows the same embodiment of the aircraft fuselage section (1) as shown in figure 3, but in the aircraft fuselage section (1) of figure 5 a deformation of the frame (2) has occurred due to a crash event. In this figure, it is shown the effect of compression loads which arise on the fuselage structure during said crash event, leading to a significant deformation of the fuselage structure.

In an embodiment, the aircraft fuselage section comprises a substantially cylindrical upper shell configured to maximize fuel tank storage capacity and a substantially vertical elliptical lower shell to enhance the crashworthiness capabilities of the fuselage structure to transfer the compression loads arisen during the crash event.

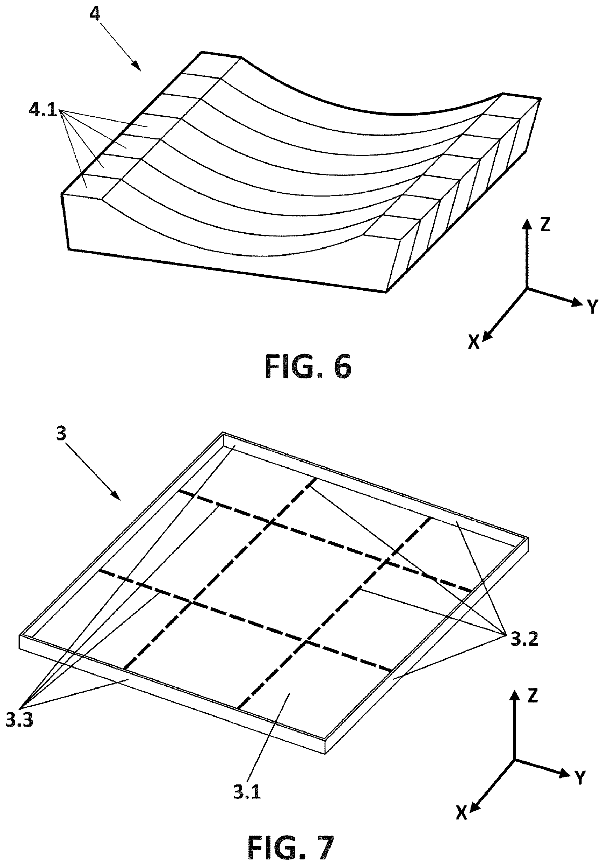

Figure 6 depicts an embodiment of the cushioning element (4) where said cushioning element (4) has a plurality of cushioning portions (4.1) configured to be assembled with each other. In other embodiments, the cushioning element (4) has only one portion.

In other embodiments not shown, the cushioning element (4) is made of one portion which covers the length required.

In an embodiment, as shown in figure 6, the cushioning element (4) is concave-shaped. In some embodiments, the cushioning element (4) is concave-shaped in order to fit to the substantially cylindrical shape of a fuel storage tank as the one shown in the embodiments of figures 1, 3, 4 or 5.

According to the claimed invention, the cushioning element (4) comprises foam, permanent inflatable means or temporary inflatable means.

In an embodiment where the cushioning element (4) comprises foam, said foam is preferably a foam with different ranges of density in order to adapt the stiffness mechanical properties of the cushioning element (4) to a desired behaviour. In that sense, the cushioning element (4) helps minimizing the stress level generated over the fuel storage tank surface area during the braking off. In some particular embodiments, the cushioning element (4) is fully made of foam. In other particular embodiments, only the outer surface of the cushioning element (4) is made of foam. In both particular embodiments, the cushioning element (4) has a specific thickness which allows said cushioning element (4) to enter in direct contact with the fuel storage tank in case of a crash event.

In an embodiment where the cushioning element (4) comprises permanent inflatable means, said permanent inflatable means are made of pneumatic material such as inflatable panels. The permanent inflatable means are filled to the required pressure in order to ensure the function of loads transfer to the floor (not shown in this figure) while minimizing the stress level generated over the fuel storage tank surface area. In an embodiment, the permanent inflatable means are filled with spheres, or other geometries, made of soft materials.

In an embodiment, both foam and permanent inflatable means can be combined as a preferred embodiment. In an embodiment, the foam has a low stiffness value in order to protect the fuel storage tank surface area and the permanent inflatable means have a low to medium stiffness value. In some further embodiments, the inflatable means also includes an airbag with a regulation valve in order to control overpressure and absorb kinetic energy, for example, by gas expansion.

In an embodiment where the cushioning element (4) comprises temporary inflatable means such as airbags, said temporary inflatable means only inflates in case of a crash event through a pyrotechnic system or similar.

Figure 7 shows an embodiment of the floor (3), where said floor (3) includes a panel (3.1) and supporting elements (3.2, 3.3), the supporting elements (3.2, 3.3) comprising a plurality of longitudinal beams (3.2) extending in the longitudinal direction (X) and a plurality of transversal beams (3.3) extending perpendicularly to the longitudinal beams (3.2). Also, even if not shown in said figure 7, the longitudinal beams (3.2) and the transversal beams (3.3) are connected to the fuselage structure.

In an embodiment, the floor (3) is made of composite material and/or metal.

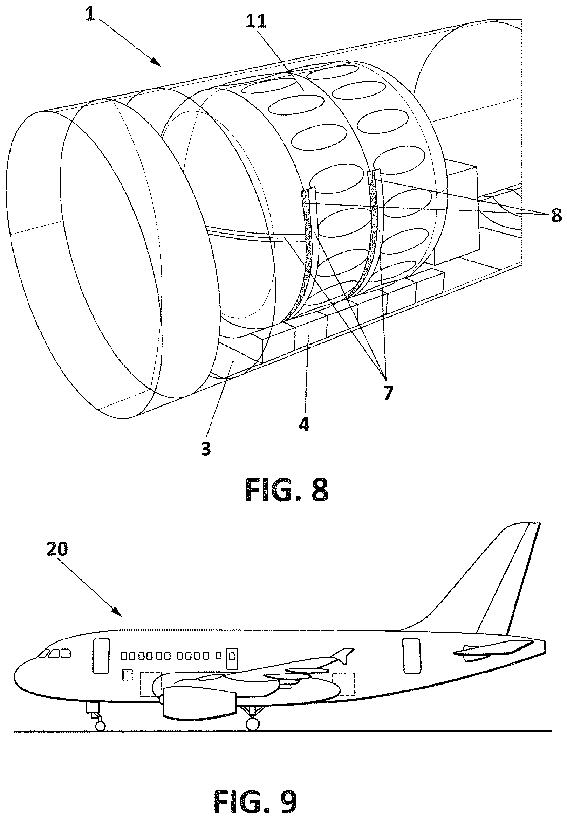

Figure 8 shows an embodiment of an aircraft fuselage section (1) comprising attaching means (7) configured to attach the first fuel storage tank (11) to the fuselage structure, for example to a frame of the fuselage structure.

As shown in figure 8, the aircraft fuselage section (1) includes a cushioning element (4) arranged on the floor (3). Although not visible in figure 8, crash absorption means are arranged between the floor (3) and the bottom part of the fuselage structure of the aircraft fuselage section (1).

In an embodiment, the attaching means (7) comprises lugs, fittings, rods, band-clamps, straps or any combination thereof. In the particular embodiment depicted in figure 8, the attaching means (7) are straps or band-clamps arranged around the fuel storage tank (11) for coupling said tank to the aircraft fuselage section (1).

In the embodiment shown in figure 8, the aircraft fuselage structure (1) comprises two safety belts (8) configured to retain the fuel storage tank (11) in case of a crash event. In the embodiment shown, the safety belts (8) are implemented as two straps or band-clamps attached to the fuselage structure, for example attached to frames of the fuselage structure.

Figure 9 shows an embodiment of an aircraft (20) comprising an aircraft fuselage section (1) according to an embodiment of the invention.

## Claims

1. An aircraft fuselage section (1) extending along a longitudinal direction (X), the aircraft fuselage section (1) comprising:
- a fuselage structure comprising a plurality of frames (2),
- a floor (3) connected to the fuselage structure, and
- crash absorption means (5) arranged between the fuselage structure and the floor (3),
wherein the crash absorption means (5) comprises a plurality of first absorption elements (5.1) and a plurality of second absorption elements (5.2) distributed along the longitudinal direction (X), the plurality of first absorption elements (5.1) and the plurality of second absorption elements (5.2) being configured for dissipating and distributing energy;
wherein the first absorption elements (5.1) are each arranged at a position corresponding to a frame (2) of the fuselage structure and the second absorption elements (5.2) are each arranged at a position between successive frames (2) of the fuselage structure; **characterized in that** the aircraft fuselage section (1) further comprises a cushioning element (4) arranged on the floor (3), the cushioning element comprising foam, permanent inflatable means or temporary inflatable means.

2. **The** aircraft fuselage section (1) according to the preceding claim, further comprising at least one fuel storage tank (11) arranged over the cushioning element (4).

3. **The** aircraft fuselage section (1) according to claim 2, wherein the fuel storage tank (11) is arranged such that there is a gap between the fuel storage tank (11) and the cushioning element (4).

4. **The** aircraft fuselage section (1) according to any of claims 2 or 3, wherein the aircraft fuselage section (1) further comprises a protective layer (6) located between the fuel storage tank (11) and the cushioning element (4).

5. **The** aircraft fuselage section (1) according to the previous claim, wherein the protective layer (6) is made of an elastomeric material.

6. **The** aircraft fuselage section (1) according to any of claims 2 to 5, wherein the aircraft fuselage section (1) further comprises attaching means (7) configured to attach the at least one fuel storage tank (11) to the fuselage structure.

7. **The** aircraft fuselage section (1) according to the previous claim, wherein the attaching means (7) comprises lugs, fittings, rods, band-clamps, straps or any combination thereof.

8. **The** aircraft fuselage section (1) according to any of the previous claims, wherein the first absorption elements (5.1) and/or the second absorption elements (5.2) are:
- metallic, preferably aluminium alloys or titanium alloys;
- made of composite material, preferably epoxy resin, foam or any combination thereof; or
- any combination thereof.

9. **The** aircraft fuselage section (1) according to any of the previous claims, wherein the first absorption elements (5.1) and/or the second absorption elements (5.2):
- are configured to undergo plastic deformation during a crash event; and/or
- are configured to collapse and/or tear out during a crash event.

10. **The** aircraft fuselage section (1) according to any of the previous claims, wherein the floor (3) comprises a panel (3.1) and supporting elements (3.2, 3.3), the supporting elements (3.2, 3.3) comprising a plurality of longitudinal beams (3.2) extending in the longitudinal direction (X) and a plurality of transversal beams (3.3) extending perpendicularly to the longitudinal beams (3.2); wherein the longitudinal beams (3.2) and the transversal beams (3.3) are connected to the fuselage structure.

11. **The** aircraft fuselage section (1) according to any of the previous claims, wherein the floor (3) is made of composite material and/or metal.

12. **The** aircraft fuselage section (1) according to any of the previous claims, wherein the cushioning element (4) comprises a plurality of cushioning portions (4.1) configured to be assembled with each other.

13. **The** aircraft fuselage section (1) according to any of the previous claims, wherein the cushioning element (4) is concave-shaped.

14. The aircraft fuselage section (1) according to any of the previous claims, wherein the aircraft fuselage section (1) comprises a substantially cylindrical upper shell configured to maximize fuel tank storage capacity and a substantially vertical elliptical lower shell configured to enhance the crashworthiness capabilities of the fuselage structure to transfer the compression loads arisen during the crash event.

15. An aircraft (20) comprising an aircraft fuselage section (1) according to any of the previous claims.

## Patentansprüche

1. Flugzeugrumpfabschnitt (1), der sich entlang einer Längsrichtung (X) erstreckt, wobei der Flugzeugrumpfabschnitt (1) Folgendes umfasst:
- eine Rumpfstruktur, umfassend eine Mehrzahl von Spanten (2),
- einen Boden (3), der mit der Rumpfstruktur verbunden ist, und
- ein zwischen der Rumpfstruktur und dem Boden (3) angeordnetes Crashabsorptionsmittel (5),
wobei das Crashabsorptionsmittel (5) eine Mehrzahl von ersten Absorptionselementen (5.1) und eine Mehrzahl von zweiten Absorptionselementen (5.2) umfasst, die entlang der Längsrichtung (X) verteilt sind, wobei die Mehrzahl von ersten Absorptionselementen (5.1) und die Mehrzahl von zweiten Absorptionselementen (5.2) zum Abbauen und Verteilen von Energie ausgelegt sind;
wobei die ersten Absorptionselemente (5.1) jeweils an einer Position angeordnet sind, die einem Spant (2) der Rumpfstruktur entspricht, und die zweiten Absorptionselemente (5.2) jeweils an einer Position zwischen aufeinanderfolgenden Spanten (2) der Rumpfstruktur angeordnet sind;
**dadurch gekennzeichnet, dass** der Flugzeugrumpfabschnitt (1) ferner ein Dämpfungselement (4) umfasst, das auf dem Boden (3) angeordnet ist, wobei das Dämpfungselement Schaum, permanente aufblasbare Mittel oder temporäre aufblasbare Mittel umfasst.

2. Flugzeugrumpfabschnitt (1) nach dem vorhergehenden Anspruch, ferner umfassend mindestens einen Kraftstoffspeichertank (11), der über dem Dämpfungselement (4) angeordnet ist.

3. Flugzeugrumpfabschnitt (1) nach Anspruch 2, wobei der Kraftstoffspeichertank (11) so angeordnet ist, dass ein Spalt zwischen dem Kraftstoffspeichertank (11) und dem Dämpfungselement (4) besteht.

4. Flugzeugrumpfabschnitt (1) nach einem der Ansprüche 2 oder 3, wobei der Flugzeugrumpfabschnitt (1) ferner eine Schutzschicht (6) umfasst, die sich zwischen dem Kraftstoffspeichertank (11) und dem Dämpfungselement (4) befindet.

5. Flugzeugrumpfabschnitt (1) nach dem vorhergehenden Anspruch, wobei die Schutzschicht (6) aus einem elastomeren Material hergestellt ist.

6. Flugzeugrumpfabschnitt (1) nach einem der Ansprüche 2 bis 5, wobei der Flugzeugrumpfabschnitt (1) ferner ein Befestigungsmittel (7) umfasst, das dazu ausgelegt ist, den mindestens einen Kraftstoffspeichertank (11) an der Rumpfstruktur zu befestigen.

7. Flugzeugrumpfabschnitt (1) nach dem vorhergehenden Anspruch, wobei das Befestigungsmittel (7) Laschen, Beschläge, Stangen, Bandklemmen, Gurte oder eine beliebige Kombination davon umfasst.

8. Flugzeugrumpfabschnitt (1) nach einem der vorhergehenden Ansprüche, wobei die ersten Absorptionselemente (5.1) und/oder die zweiten Absorptionselemente (5.2) sind:
- metallisch, vorzugsweise Aluminiumlegierungen oder Titanlegierungen;
- aus Verbundmaterial, vorzugsweise Epoxidharz, Schaum oder einer beliebigen Kombination davon, hergestellt; oder
- eine beliebige Kombination davon.

9. Flugzeugrumpfabschnitt (1) nach einem der vorhergehenden Ansprüche, wobei die ersten Absorptionselemente (5.1) und/oder die zweiten Absorptionselemente (5.2):
- dazu ausgelegt sind, sich während eines Crashereignisses plastisch zu verformen; und/oder
- dazu ausgelegt sind, bei einem Crashereignis zusammenzufallen und/oder auszureißen.

10. Flugzeugrumpfabschnitt (1) nach einem der vorhergehenden Ansprüche, wobei der Boden (3) eine Platte (3.1) und Stützelemente (3.2, 3.3) umfasst, wobei die Stützelemente (3.2, 3.3) eine Mehrzahl von sich in der Längsrichtung (X) erstreckenden Längsträgern (3.2) und eine Mehrzahl von sich senkrecht zu den Längsträgern (3.2) erstreckenden Querträgern (3.3) umfassen; wobei die Längsträger (3.2) und die Querträger (3.3) mit der Rumpfstruktur verbunden sind.

11. Flugzeugrumpfabschnitt (1) nach einem der vorhergehenden Ansprüche, wobei der Boden (3) aus Verbundmaterial und/oder Metall hergestellt ist.

12. Flugzeugrumpfabschnitt (1) nach einem der vorhergehenden Ansprüche, wobei das Dämpfungselement (4) eine Mehrzahl von Dämpfungsabschnitten (4.1) umfasst, die dazu ausgelegt sind, miteinander zusammengefügt zu werden.

13. Flugzeugrumpfabschnitt (1) nach einem der vorhergehenden Ansprüche, wobei das Dämpfungselement (4) konkav geformt ist.

14. Flugzeugrumpfabschnitt (1) nach einem der vorhergehenden Ansprüche, wobei der Flugzeugrumpfabschnitt (1) eine im Wesentlichen zylindrische obere Schale, die dazu ausgelegt ist, die Kraftstofftankspeicherkapazität zu maximieren, und eine im Wesentlichen vertikale elliptische untere Schale, die dazu ausgelegt ist, die Crashsicherheitsfähigkeiten der Rumpfstruktur zu verbessern, um die während des Crashereignisses entstandenen Drucklasten zu übertragen, umfasst.

15. Flugzeug (20), umfassend einen Flugzeugrumpfabschnitt (1) nach einem der vorhergehenden Ansprüche.

## Revendications

1. Tronçon de fuselage d'aéronef (1) s'étendant le long d'une direction longitudinale (X), le tronçon de fuselage d'aéronef (1) comprenant :
- une structure de fuselage comprenant une pluralité de cadres (2),
- un plancher (3) relié à la structure de fuselage, et
- des moyens d'absorption d'écrasement (5) agencés entre la structure de fuselage et le plancher (3),
dans lequel les moyens d'absorption d'écrasement (5) comprennent une pluralité de premiers éléments d'absorption (5.1) et une pluralité de seconds éléments d'absorption (5.2) distribués le long de la direction longitudinale (X), la pluralité de premiers éléments d'absorption (5.1) et la pluralité de seconds éléments d'absorption (5.2) étant configurés pour dissiper et distribuer de l'énergie ;
dans lequel les premiers éléments d'absorption (5.1) sont chacun agencés à une position correspondant à un cadre (2) de la structure de fuselage et les seconds éléments d'absorption (5.2) sont chacun agencés à une position entre des cadres successifs (2) de la structure de fuselage ;
**caractérisé en ce que** le tronçon de fuselage d'aéronef (1) comprend en outre un élément de rembourrage (4) agencé sur le plancher (3), l'élément de rembourrage comprenant de la mousse, des moyens gonflables permanents ou des moyens gonflables temporaires.

2. Tronçon de fuselage d'aéronef (1) selon la revendication précédente, comprenant en outre au moins un réservoir de stockage de carburant (11) agencé pardessus l'élément de rembourrage (4).

3. Tronçon de fuselage d'aéronef (1) selon la revendication 2, dans lequel le réservoir de stockage de carburant (11) est agencé de manière telle qu'il y a un écart entre le réservoir de stockage de carburant (11) et l'élément de rembourrage (4).

4. Tronçon de fuselage d'aéronef (1) selon quelconques des revendications 2 ou 3, dans lequel le tronçon de fuselage d'aéronef (1) comprend en outre une couche de protection (6) positionnée entre le réservoir de stockage de carburant (11) et l'élément de rembourrage (4).

5. Tronçon de fuselage d'aéronef (1) selon la revendication précédente, dans lequel la couche de protection (6) est faite d'un matériau élastomère.

6. Tronçon de fuselage d'aéronef (1) selon quelconques des revendications 2 à 5, dans lequel le tronçon de fuselage d'aéronef (1) comprend en outre des moyens d'attache (7) configurés pour attacher l'au moins un réservoir de stockage de carburant (11) à la structure de fuselage.

7. Tronçon de fuselage d'aéronef (1) selon la revendication précédente, dans lequel les moyens d'attache (7) comprennent des pattes, des raccords, des tiges, des serre-joints à sangle, des brides, ou une quelconque combinaison de ceux-ci.

8. Tronçon de fuselage d'aéronef (1) selon de quelconques des revendications précédentes, dans lequel les premiers éléments d'absorption (5.1) et/ou les seconds éléments d'absorption (5.2) sont :
- métalliques, de préférence des alliages d'aluminium ou des alliages de titane ;
- faits de matériau composite, de préférence de résine époxy, de mousse, ou d'une quelconque combinaison de ceux-ci ; ou
- une quelconque combinaison de ceux-ci.

9. Tronçon de fuselage d'aéronef (1) selon de quelconques des revendications précédentes, dans lequel les premiers éléments d'absorption (5.1) et/ou les seconds éléments d'absorption (5.2) :
- sont configurés pour subir une déformation plastique durant un événement d'écrasement ; et/ou
- sont configurés pour s'aplatir et/ou se déchirer durant un événement d'écrasement.

10. Tronçon de fuselage d'aéronef (1) selon de quelconques des revendications précédentes, dans lequel le plancher (3) comprend un panneau (3.1) et des éléments de support (3.2, 3.3), les éléments de support (3.2, 3.3) comprenant une pluralité de poutres longitudinales (3.2) s'étendant dans la direction longitudinale (X) et une pluralité de poutres transversales (3.3) s'étendant perpendiculairement aux poutres longitudinales (3.2) ; dans lequel les poutres longitudinales (3.2) et les poutres transversales (3.3) sont reliées à la structure de fuselage.

11. Tronçon de fuselage d'aéronef (1) selon de quelconques des revendications précédentes, dans lequel le plancher (3) est fait de matériau composite et/ou de métal.

12. Tronçon de fuselage d'aéronef (1) selon de quelconques des revendications précédentes, dans lequel l'élément de rembourrage (4) comprend une pluralité de parties de rembourrage (4.1) configurées pour être assemblées les unes avec les autres.

13. Tronçon de fuselage d'aéronef (1) selon de quelconques des revendications précédentes, dans lequel l'élément de rembourrage (4) est de forme concave.

14. Tronçon de fuselage d'aéronef (1) selon de quelconques des revendications précédentes, dans lequel le tronçon de fuselage d'aéronef (1) comprend une coque supérieure sensiblement cylindrique configurée pour maximiser une capacité de stockage de réservoir de carburant et une coque inférieure elliptique sensiblement verticale configurée pour améliorer les capacités de résistance à l'écrasement de la structure de fuselage pour transférer les charges de compression s'étant produites durant l'événement d'écrasement.

15. Aéronef (20), comprenant un tronçon de fuselage d'aéronef (1) selon de quelconques des revendications précédentes.
